# EUROPÄISCHE PATENTSCHRIFT

(11) **EP 1 059 440 B1**
(45) Veröffentlichungstag und Bekanntmachung des Hinweises auf die Patenterteilung: **22.03.2006**
(21) Anmeldenummer: 00120318.1
(22) Anmeldetag: 06.09.1999
(51) Int. Cl.: F02N 11/04

(54) **Starter-Generator für ein Kraftfahrzeug**
Starter-Generator for combustion vehicle
Démarreur-Générateur pour véhicule

(30) Priorität: 18.09.1998 DE 19842928; 08.04.1999 DE 29906313 U
(43) Veröffentlichungstag der Anmeldung: 13.12.2000
(62) Teilanmeldung aus: 99117555.5
(73) Patentinhaber: SIEMENS AKTIENGESELLSCHAFT, 80333 München (DE)
(72) Erfinder: Altenbernd, Gerald, Dr., 30455 Hannover (DE); Schaefer, Heinz, Dr., 97230 Estenfeld (DE); Waehner, Ludwig, 97234 Reichenberg (DE)

(56) Entgegenhaltungen:
- EP-A- 0 103 821
- EP-A- 0 151 935
- WO-A-94/07025
- DE-A- 4 423 577
- FR-A- 2 739 505
- US-A- 5 734 217

## Beschreibung

Die Erfindung bezieht sich auf einen Starter-Generator für ein Kraftfahrzeug gemäß Patentanspruch 1. Derartige Starter-Generatoren übernehmen einerseits die Funktion eines sonst üblichen Anlassers mit nachgeschaltetem Getriebe als auch die Funktion einer davon gesonderten Lichtmaschine zur Ladung der Batterie. Starter-Generatoren dieser Art sind üblicherweise zwischen Verbrennungsmaschine einerseits und Getriebe bzw. Getriebeautomatik andererseits koaxial zur Kurbelwelle in direkter Verbindung oder in kuppelbarer Verbindung zu dieser angeordnet (EP 0 103 821 B1; WO 94/07025).

Durch die DE 44 23 577 A1 ist ein aktives Schwingungsdämpfersystem mit einer ein Schwungrad aufweisenden Kurbelwelle eines Kraftfahrzeuges bekannt, wobei das Schwungrad als bewegtes Element einer elektrischen Linearmaschine ausgebildet ist und dem axial beidseitig je Statorspulen zugeordnet sind; dieses Schwingungsdämpfersystem kann auch als Anlasser sowie als Lichtmaschine arbeiten und sowohl als Gleichstrom-, Wechselstrom-, oder Drehstrommaschine ausgebildet sein.

Aus US-A-5.734 217, das als nächstliegender Stand der Technik angesehen wird, ist ein Starter-Generator für ein Kraftfahrzeug bekannt mit einer Asynchronmaschine mit Scheibenläufer; mit einem Scheibenläufer mit in einem Läuferblechpaket angeordneter Käfigwicklung; mit einem dem Scheibenläufer zugeordneten Ständer, mit in einem Ständerblechpaket angeordneter Ständerwicklung.

Gemäß Aufgabe vorliegender Erfindung soll ein aufwandsarmer, kleinbauender betriebssicherer Starter-Generator höchster Leistungsdichte geschaffen werden, der auch für generatorische Leistungen von mehr als 4 kW, d.h. insbesondere für Kraftfahrzeuge der oberen Mittelklasse und Oberklasse, verwendbar ist.

Die Lösung der vorgenannten Aufgabe gelingt erfindungsgemäß durch einen Starter-Generator gemäß Patentanspruch 1; vorteilhafte Ausgestaltungen der Erfindung sind jeweils Gegenstand der Unteransprüche.

Durch Verwendung einer Asynchronmaschine in Scheibenläuferbauart läßt sich bei einfacher und energiesparender Bauweise eine leichte, insbesondere feldorientierte Regelung sowie ein auch bei hoher Leistungsdichte kurzschlußfester und überhitzungsbeständiger Starter-Generator mit geringen Wirbelstromverlusten schaffen. Durch die Aufweitung des Luftspaltes zwischen Scheibenläufer und Ständer zumindest nach radial außen können, insbesondere bei Aufnahme des Scheibenläufers eines Starter-Generators auf bzw. von der Kurbelwelle einer Kfz-Verbrennungsmaschine, in vorteilhafter Weise Taumelbewegungen der Kurbelwelle und ein entsprechender Seiten-Schlag des rotierenden Scheibenläufers nicht zu einer Berührung mit den Ständerteilen und somit nicht zu einer Betriebsstörung führen; eine nach radial außen kegelförmige Erweiterung des Luftspalts vereinigt in vorteilhafter Weise den für ein hohes Moment vorteilhaften engen Luftspalt mit der mit zunehmendem radialen Abstand zur Kurbelwelle ansteigenden Taumelausschlagsgefahr.

Zur Erhöhung der Leistungsdichte weist der Scheibenläufer in einer ersten axialen Ebene erste, dem ersten Statorteil zugeordnete bzw. zugewandte Kurzschlußstäbe und in einer zweiten axialen Ebene zweite, dem zweiten Statorteil zugeordnete bzw. zugewandte Kurzschlußstäbe auf; im Sinne einer geringen Drehmomentenwelligkeit und kompakten Bauweise sind die ersten Kurzschlußstäbe gegenüber den zweiten Kurzschlußstäben tangential versetzt. Regelungstechnisch ist in vorteilhafter Weise eine feldorientierte Regelung von zwei parallelgeschalteten Asynchronmaschinen zugrundegelegt. In gleicher Weise wirkend ist nach einer weiteren Ausgestaltung ein tangentialer Versatz der Nuten und damit der von diesen aufgenommenen Wicklung des ersten Ständerbauteils gegenüber den Nuten des zweiten Ständerbauteils vorgesehen.

Durch die nach einer Ausgestaltung vorgesehene gezielte Aufteilung des Stators in je einen Statorteil axial beidseitig des Scheibenläufers sind axial einseitige Zugkräfte auf den Läufer und damit gegebenenfalls auf die Kurbelwelle des Verbrennungsmotors vermeidbar.

Aufgrund des geringen Läuferträgheitsmomentes und des kompakten Einbauraums ist nach einer Ausgestaltung der Erfindung weiterhin vorgesehen, den erfindungsgemäßen Starter-Generator nicht zwischen Verbrennungsmaschine und axial nachgeordnetem Schaltgetriebe bzw. Automatikgetriebe sondern in schwingungstechnisch besonders vorteilhafter Weise an dem kühlerseitigen Ende der Kurbelwelle der Verbrennungsmaschine anzuordnen; diese Variante bringt zusätzlich entscheidende Vorteile hinsichtlich Montage und Wartung.

Die Erfindung sowie weitere vorteilhafte Ausgestaltungen der Erfindung werden im folgenden anhand schematischer Ausführungsbeispiele in der Zeichnung näher erläutert; darin zeigen:
- FIG 1: in einem axialen Schnittbild einen zwischen einer Verbrennungsmaschine und einem Getriebe konzentrisch zur Kurbelwelle angeordneten Starter-Generator als Asynchronmaschine mit Scheibenläufer und axial beidseitig angeordneten Ständerteilen;
- FIG 2: in einem perspektivischen Schnittbild den Scheibenläufer des Starter-Generators gemäß FIG 1;
- FIG 3: die Draufsicht auf die unbewickelten Blechpakete des Scheibenläufers und der axial beidseitig angeordneten Ständerteile eines Starter-Generators mit tangential gegeneinander versetzten Nuten des einen Ständerteils gegenüber dem anderen Ständerbauteil;
- FIG 4: die Draufsicht auf die unbewickelten Blechpakete des Scheibenläufers und der axial beidseitig angeordneten Ständerteile eines Starter-Generators mit nach radial außen kegelförmig erweitertem Luftspalt;
- FIG 5: die Draufsicht auf die unbewickelten Blechpakete des Scheibenläufers und der axial beidseitig angeordneten Ständerteile eines Starter-Generators mit gebrochenen Leiterzahlen pro Pol bzw. Polpaar für zumindest einen Wicklungsstrang und dementsprechend ungleich großen Nuten;
- FIG 6: eine axiale Draufsicht auf ein Statorteil-Blech eines axial geschichteten Blechpaketes mit einer Nutausbildung und Wicklungsverteilung für einen Starter-Generator mit gebrochener Leiterzahl pro Pol bzw. Polpaar für zumindest einen Wicklungsstrang in sinngemäßer konstruktiver Nutanordnung gemäß FIG 5;
- FIG 7: eine erste Anordnung des erfindungsgemäßen Starter-Generators zwischen Verbrennungsmaschine und axial nachgeschaltetem Getriebe;
- FIG 8: eine zweite Anordnung des erfindungsgemäßen Starter-Generators an dem kühlerseitigen, dem Getriebe abgewandten Ende der Verbrennungsmaschine.

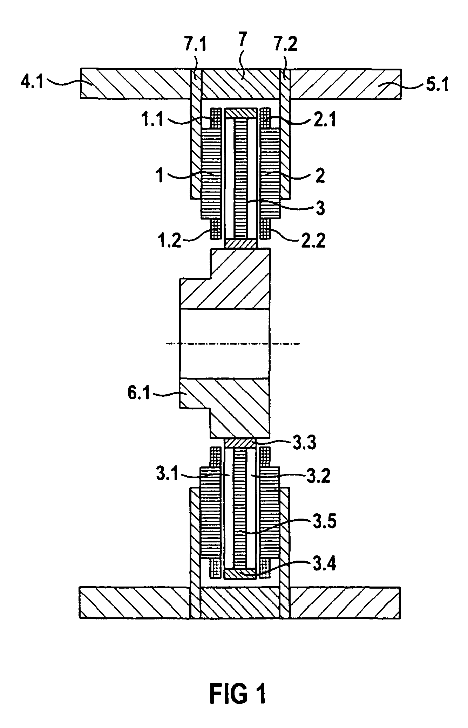

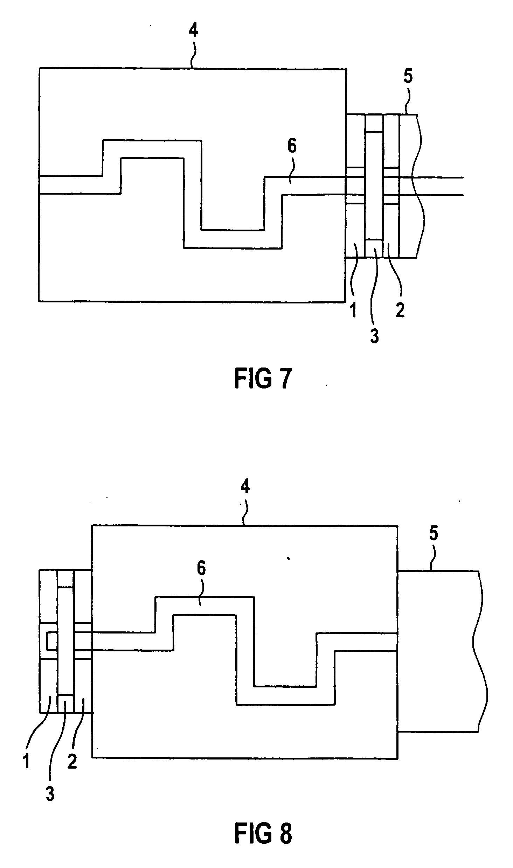

FIG 1 zeigt im Axialschnitt einen,erfindungsgemäßen Starter-Generator, der gemäß FIG 7 axial zwischen einer Verbrennungsmaschine 4 einerseits und einem Getriebe 5, insbesondere Automatikgetriebe, andererseits angeordnet ist. Der Scheibenläufer 3 des Starter-Generators in Asynchronmaschinenbauart ist konzentrisch zur Kurbelwelle 6 der Verbrennungsmaschine 4 mittels eines Kurbelwellenflansches 6.1 gehaltert. Axial beidseitig zu dem Scheibenläufer 3 ist jeweils ein erster Ständerteil 1 am Maschinengehäuse 4.1 der Verbrennungsmaschine 4 und ein zweiter Ständerteil 2 am Getriebegehäuse 5.1 des Getriebes 5 gehaltert.

Der Scheibenläufer 3 ist als Käfigläufer mit von einem geblechten Läuferblechpaket 3.5 aufgenommenen Läuferkurzschlußstäben 3.1;3.2 und diese radial endseitig verbindendem radial innerem Kurzschlußring 3.3 und radial äußerem Kurzschlußring 3.4 ausgebildet.

Axial beidseitig zu dem Scheibenläufer 3 ist jeweils mittels einer Halterung 7 an deren Halterungsarmen 7.1 bzw.7.2 ein erster Ständerteil 1 und jeweils ein zweiter Ständerteil 2 fixierbar; von den Ständerteilen 1;2 sind hier jeweils ein Ständerblechpaket 1.3 bzw.2.3 mit darin zur Aufnahme einer Statorwicklung vorgesehenen, hier nur im ersten Ständerteil 1 eingezeichneten Nuten 1.31 und radial endseitigen Wicklungsköpfen 1.1;1.2 bzw.2.1;2.2 dargestellt.

Wie anhand des Läuferblechpaketes 3.5 sowie der Ständerblechpakete 1.3 des ersten Ständerteils 1 zeichnerisch angedeutet, ist die geblechte Ausführungsform in fertigungstechnisch vorteilhafter Weise durch spiralförmiges Rollen eines der jeweils axialen Höhe der Blechpakete entsprechenden Blechbandes hergestellt.

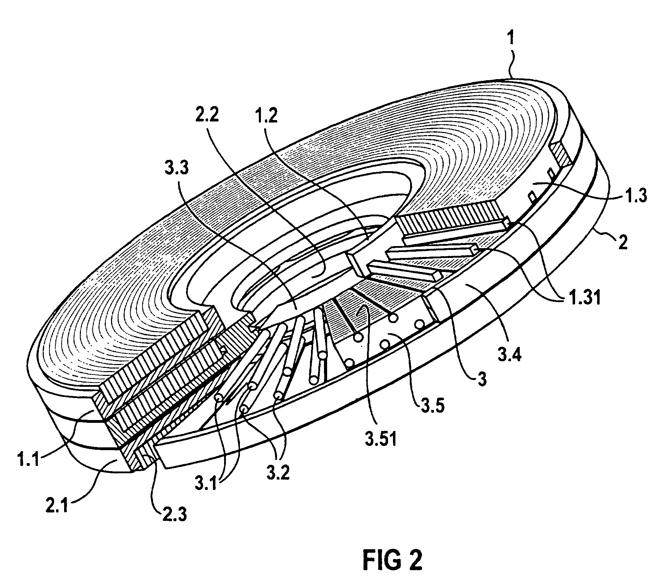

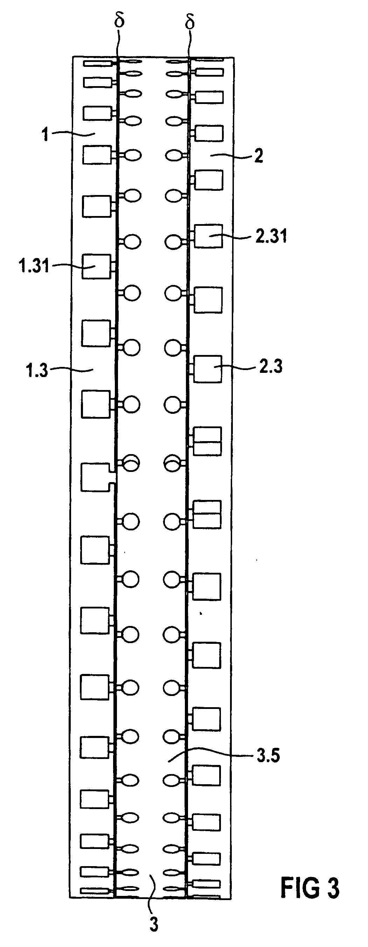

Zur Erhöhung der Leistungsdichte sind in vorteilhafter Weise zwei axial beabstandete Ebenen von Kurzschlußstäben vorgesehen; erste Kurzschlußstäbe 3.1 sind in einer ersten Kurzschlußstab-Ebene dem ersten Ständerteil 1 zugewandt und zweite Kurzschlußstäbe 3.2 sind in einer axial dazu beabstandeten zweiten Kurzschlußstab-Ebene dem zweiten Ständerteil 2 zugewandt. Zur Minderung der Drehmomentenwelligkeit und/oder größeren axialen Kompaktheit sind die ersten Kurzschlußstäbe 3.1 gegenüber den zweiten Kurzschlußstäben 3.2 - wie aus der Schnittdarstellung gemäß FIG 2 ersichtlich- tangential gegeneinander versetzt. Zum gleichen Zweck ist nach einer Ausgestaltung der Erfindung gemäß FIG 3 vorgesehen, die hier zur Verdeutlichung des Wesentlichen jeweils ohne Ständerwicklung dargestellten Nuten 1.31 des ersten Ständerteils 1 gegenüber den Nuten 2.31 des zweiten Ständerteils 2 tangential versetzt zueinander, insbesondere "auf mittige Lücke", anzuordnen.

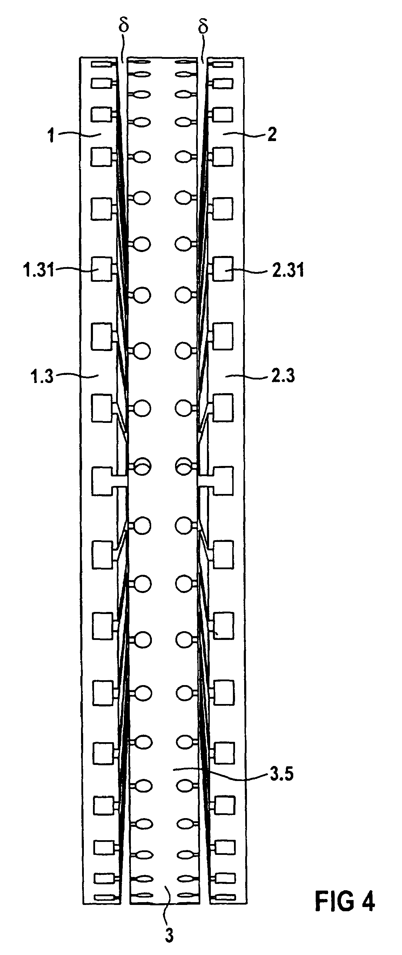

FIG 4 zeigt einen erfindungsgemäßen Starter-Generator mit einem gegenüber dem hinsichtlich eines fertigungstechnisch machbaren optimalen Maschinenmomentes, insbesondere nach radial außen, vergrößerten Luftspalts δ zwischen den axial benachbarten Blechpaketen 1.3;3.5 bzw. 2.3;3.5 des ersten Ständerteils 1 und des Scheibenläufers 3 bzw. des zweiten Ständerteils 2 und des Scheibenläufers 3, derart daß ein Seiten-Schlag des Scheibenläufers 3 aufgrund einer Taumelbewegung der diesen aufnehmenden Kurbelwelle 6 nicht zu einer schlagenden Berührung zwischen dem rotierenden Scheibenläufer 3 und den axial benachbarten Ständerteilen 1 bzw. 2 führt. Im vorliegenden Ausführungsbeispiel ist eine einerseits an den am Außenradius maximal möglichen Seiten-Schlag angepaßte jedoch andererseits durch möglichst engen Luftspalt δ momentenoptimale kegelförmige, sich nach radial außen öffnende Erweiterung des Luftspaltes δ durch entsprechende Reduzierung der axialen Höhe der Blechpakte 1.3 bzw. 2.3 der Ständerteile 1 bzw. 2 bei konstanter axialer Höhe des Blechpaktes 3.5 des Scheibenläufers 3 verwirklicht. Im Rahmen vorliegender Erfindung kann auch eine entsprechende Reduzierung der axialen Höhe des Scheibenläufers 3 allein oder zusammen mit der axialen Höhe der Ständerteile 1 bzw. 2 vorgesehen sein.

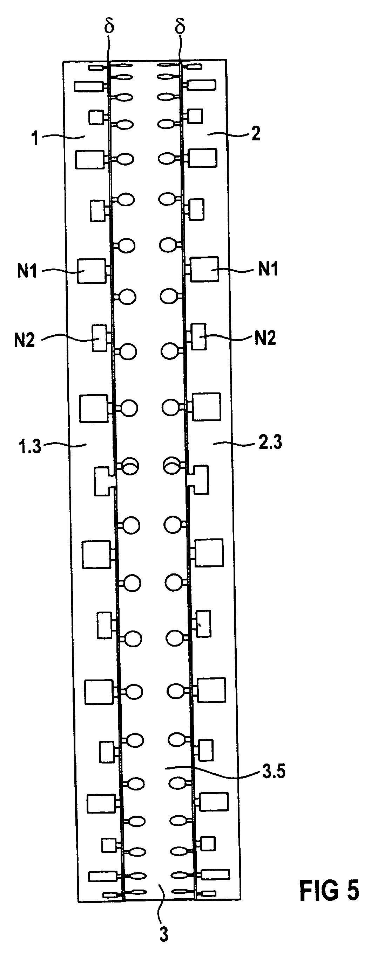

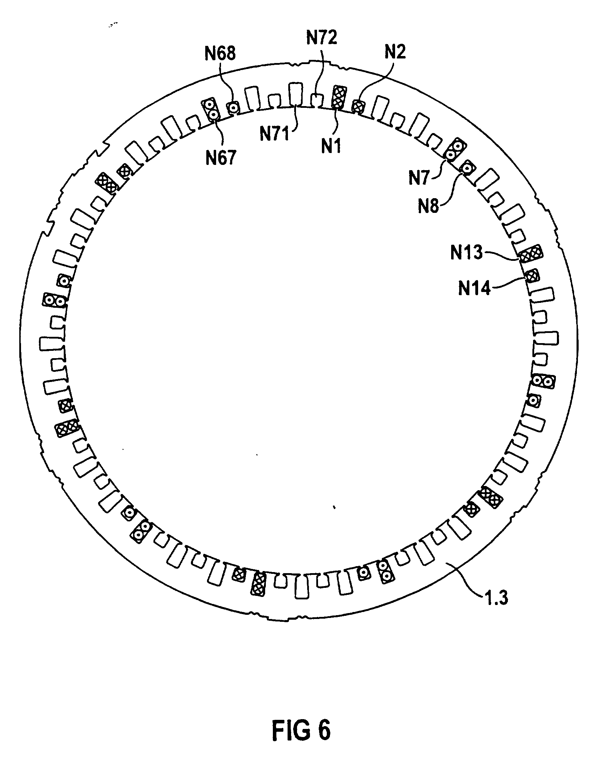

FIG 5,6 zeigen in weiterer Ausgstaltung einen Starter-Generator der Erfindung mit über den Umfang des Ständerteils 1 bzw. 2 wechselweise unterschiedlich großen Nuten N1 bzw. N2, die zur fertigungstechnisch einfachen individuellen Auslegungsmöglichkeit der Drehmoment-Drehzahl-Kennlinie des Starter-Generators nach der in der deutschen Patentanmeldung Aktz. 198 45 520.8 bereits vorgeschlagenen Art gemäß der auf eine Blechlamelle eines axial geschichteten Blechpaketes in Mantelausführung bezogenen FIG 6 mit einer Wicklung mit sogenannten gebrochenen Leiterzahlen derart belegt sind, daß bei einer m-strängigen Ständerwicklung mit einer Statorspule mit jeweils zumindest drei Spulenseiten pro Pol und/oder Polpaare und einer kleinen unganzzahligen Wicklungszahl pro Pol und/oder Polpaar von den am Umfang insgesamt 72 Nuten N1-N72 eine erste, den größeren Teil der Spulenseiten aufnehmende, Nut N1 abwechselt mit einer den restlichen Teil der Spulenseiten aufnehmenden Nut N2. Im vorliegenden Fall ist eine Wicklung mit der gebrochenen bzw. unganzzahligen Windungszahl W = 1,5 dadurch verwirklicht, daß pro Polpaar in jeweils einer ersten Nut N1 bzw. N7 usw. zwei Spulenseiten und in einer zweiten Nut N7;N19 usw. die verbleibende Spulenseite eingewickelt sind; damit ergeben sich pro Polpaar und Strang mit der angenommenen und verteilten Spule drei Windungen W = 3 und somit eine magnetisch wirksame Windungszahl pro Pol von W = 1,5.

FIG 8 zeigt in Abänderung zu der bereits erläuterten Bauteilanordnung gemäß FIG 7 bei ansonsten im wesentlichen gleicher Ausführung die Anordnung des erfindungsgemäßen Starter-Generators an dem kühlerseitigen Ende der Verbrennungsmaschine 4 bzw. deren Kurbelwelle 6; unter Ausnutzung des erfindungsgemäß möglichen wesentlich geringeren Rotorgewichtes bzw. Rotorträgheitsmomentes ergeben sich dadurch schwingungs- sowie montage- und wartungstechnische Vorteile.

## Patentansprüche

1. Starter-Generator für ein Kraftfahrzeug
- mit einer Asynchronmaschine mit Scheibenläufer (3);
- mit einem Scheibenläufer (3) mit in einem Läuferblechpaket (3.5) angeordneter Käfigwicklung (3.1-3.4);
- mit einem dem Scheibenläufer (3) zugeordneten Ständer (1;2) mit in einem Ständerblechpaket (1.3;2.3) angeordneter Ständerwicklung;
- mit einem sich von der Mittelachse zumindest nach radial außen, insbesondere kegelförmig, erweiternden Luftspalt (δ) zwischen dem Scheibenläufer (3) und dem axial benachbarten Ständer (1;2) bzw. dem ersten Ständerteil (1 bzw.2).

2. Starter-Generator nach Anspruch 1
- mit einer erweiterten Ausbildung des Luftspaltes (δ) durch entsprechende Ausbildung des ersten Ständerteils (1) bzw. des zweiten Ständerteils (2) bei einem Scheibenläufer (3) mit über seine gesamte radiale Ausdehnung konstanter axialer Höhe.

3. Starter-Generator nach Anspruch 1 und/oder 2
- mit in Scheibenläuferumfang verlaufenden, in radialer Richtung zueinander isolierten, Blechen des Ständerblechpaketes (1.3;2.3) bzw. des Läuferblechpaketes (3.5).

4. Starter-Generator nach Anspruch 3
- mit aus in Umfangsrichtung spiralförmig gewickelten Blechstreifen gebildetem Ständerblechpaket (1.3;2.3) bzw. Läuferblechpaket (3.5).

5. Starter-Generator nach zumindest einem der Ansprüche 1-4
- mit radial zwischen einem radial inneren tangential umlaufenden Kurzschlußring (3.3) und einem radial äußeren tangential umlaufenden Kurzschlußring (3.4) in dem Läuferblechpaket (3.5) verlaufenden Läuferkurzschlußstäben (3.1;3.2).

6. Starter-Generator nach zumindest einem der Ansprüche 1-4
- mit radial zwischen einem radial äußeren Wickelkopf (1.1;2.1) und einem radial inneren Wickelkopf (1.2;2.2) im Ständerblechpaket (1.3) verlaufenden Nuten (1.31) zur Aufnahme einer Ständerwicklung mit den Wickelköpfen (1.1;1.2 bzw.2.1;2.2).

7. Starter-Generator nach zumindest einem der Ansprüche 1-6
- mit jeweils axial beidseitig des Scheibenläufers (3) im Sinne eines neutralisierten Axialzuges angeordnetem ersten Ständerteil (1) bzw. zweiten Ständerteil (2).

8. Starter-Generator nach zumindest einem der Ansprüche 1-7
- mit dem ersten Ständerteil (1) zugeordneten bzw. zugewandten ersten Läuferkurzschlußstäben (3.1), insbesondere in einer ersten axialen Kurzschlußstab-Ebene, und mit dem zweiten Ständerteil (2) zugeordneten bzw. zugewandten zweiten Läuferkurzschlußstäben (3.2), insbesondere in einer zweiten axialen Kurzschlußstab-Ebene;
- mit einem tangentialen Versatz der ersten Läuferkurzschlußstäbe (3.1) gegenüber den zweiten Läuferkurzschlußstäben (3.2).

9. Starter-Generator nach zumindest einem der Ansprüche 1-8
- mit koaxial zur Achse der Kurbelwelle (6) einer Verbrennungsmaschine (4) des Kraftfahrzeuges angeordnetem Scheibenläufer (3);
- mit koaxial zur Achse der Kurbelwelle (6) der Verbrennungsmaschine (4) des Kraftfahrzeuges angeordnetem Ständer (1;2) bzw. erstem Ständerteil (1) und zweitem Ständerteil (2).

10. Starter-Generator nach zumindest einem der Ansprüche 1-9
- mit einer Anordnung axial zwischen der Verbrennungsmaschine (4) einerseits und einem Getriebe (5) andererseits, insbesondere mit am Maschinengehäuse (4.1) der Verbrennungsmaschine (4) befestigtem ersten Ständerteil (1) und am Gehäuse (5.1) des Getriebes (5) befestigtem zweiten Ständerteil (2) und axial zwischen dem ersten Ständerteil (1) und dem zweiten Ständerteil (2) angeordnetem Scheibenläufer (3).

11. Starter-Generator nach zumindest einem der Ansprüche 1-9
- mit einer Anordnung des Starter-Generators an dem vom getriebeseitigen Ende abgewandten kühlerseitigen Ende der Verbrennungsmaschine (4).

12. Starter-Generator nach zumindest einem der Ansprüche 1-11
- mit einem tangentialen Versatz der Nuten (1.31) des ersten Ständerteils (1) gegenüber den Nuten (2.31) des zweiten Ständerteils (2).

13. Starter-Generator nach zumindest einem der Ansprüche 1-12
- mit einer m-strängigen Ständerwicklung;
- mit zumindest einer Ständerspule mit zumindest drei Spulenseiten pro Pol und/oder Polpaar;
- mit einer kleinen unganzzahligen Windungszahl pro Pol und/oder Polpaar;
- mit einem in Nuten (N1-N72) die m-strängige Ständerwicklung aufnehmenden Ständerblechpaket (1.3 bzw. 2.3);
- mit je Ständerblechpaket 1.3 bzw. 2.3 jeweils zumindest einer ersten, den größeren Teil der Spulenseiten aufnehmenden Nut (N1) und einer zweiten, den restlichen Teil der Spulenseiten aufnehmenden Nut (N2).

14. Starter-Generator nach Anspruch 13
- mit im Sinne einer minimalen Streuung bzw. maximalen Nutfüllung jeweils der Zahl der eingewickelten Spulenseiten angepaßte Nutfläche der ersten Nut (N1) bzw. der zweiten Nut (N2).

15. Starter-Generator nach Anspruch 13 und/oder 14
- mit einer wechselweisen Anordnung der ersten Nut (N1) und der zweiten Nut (N2) über den Umfang des Ständerblechpaketes (1.3 bzw. 2.3).

## Claims

1. Starter-generator for a motor vehicle
- with an asynchronous machine with disk-type rotor (3);
- with a disk-type rotor (3) with a cage winding (3.1-3.4) arranged in a rotor core (3.5);
- with a stator (1;2) assigned to the disk-type rotor (3) with a stator winding arranged in a stator core (1.3;2.3);
- with an air gap (δ) extending at least radially outwards from the center axis, especially in the form of a sphere between the disk-type rotor (3) and the axial adjacent stator (1;2) or the first stator part (1 or 2).

2. Starter-generator in accordance with claim 1
- with an expanded shaping of the air gap (δ) through a corresponding shaping of the first stator part (1) or of the second stator part (2) with a disk-type rotor (3) with an axial height constant over its entire radial extension.

3. Starter-generator in accordance with claim 1 and/or 2
- with laminations of the laminated stator core (1.3;2.3) or of the laminated rotor core (3.5) running in the disk-type rotor circumference, isolated from each other in a radial direction.

4. Starter-generator in accordance with claim 3
- with a stator core (1.3;2.3) or rotor core (3, 5) formed from metal strips wound in a spiral form in the peripheral direction.

5. Starter-generator in accordance with at least one of claims 1-4,
- with rotor short circuit bars (3.1;3.2) running radially in the rotor core (3.5) between of a radial inner tangentially rotating short circuit ring (3.3) and a radial outer tangentially rotating short circuit ring (3.4).

6. Starter-generator in accordance with at least one of the claims 1-4
- with slots (1.31) for accommodating a stator winding with the winding heads (1.1;1.2 or 2.1;2.2) running radially between a radial outer winding head (1.1;2.1) and a radial inner winding head (1.2;2.2) in the stator core (1.3).

7. Starter-generator in accordance with at least one of the claims 1-6
- with a first stator part (1) or a second stator part (2) each arranged axially on both sides of the disk-type rotor (3) in the sense of a neutralized axial tension.

8. Starter-generator in accordance with at least one of the claims 1-7
- with first rotor short circuit bars (3.1) assigned to or facing towards the first stator part (1), especially in a first axial short circuit bar plane, and with second rotor short circuit bars (3.2) assigned to or facing towards the second stator part (2), especially in a second axial short circuit bar plane; with a tangential offset of the first rotor short circuit bars (3.1) opposite the second rotor short circuit bars (3.2).

9. Starter-generator in accordance with at least one of the claims 1-8
- with a disk-type rotor (3) arranged coaxially to the axis of the crankshaft (6) of an internal combustion engine (4);
- with stators (1;2) or a first stator part (1) and second stator part (2) arranged coaxially to the axis of the crankshaft (6) of the internal combustion engine (4) of the motor vehicle.

10. Starter-generator in accordance with at least one of the claims 1-9
- with an arrangement axial between the internal combustion engine (4) on one side and a transmission (5) on the other side, especially with a first stator part (1) attached to the engine housing (4.1) of the internal combustion engine (4) and a second stator part (2) attached to the housing (5.1) of the transmission (5) and a disk-type rotor (3) arranged axially between the first stator part (1) and the second stator part (2).

11. Starter-generator in accordance with at least one of the claims 1-9
- with an arrangement of the starter-generator on the cooler-side end of the internal combustion engine (4) facing away from the transmission-side end.

12. Starter-generator in accordance with at least one of the claims 1-11
- with a tangential offset of the slots (1.31) of the first stator part (1) opposite the slots (2.31) of the second stator part (2).

13. Starter-generator in accordance with at least one of the claims 1-12
- with an m-strand stator winding;
- with at least one stator coil with at least three coil sides per pole and/or pole pair;
- with a small odd number of windings per pole and/or pole pair;
- with a stator core (1.3 or 2.3) accommodating the m-strand stator winding in slots (N1-N72);
- with, for each stator core 1.3 or 2.3, at least one first slot (N1) accommodating the greater part of the coil sides and a second slot (N2) accommodating the remaining part of the coil sides.

14. Starter-generator in accordance with claim 13
- with a slot surface of the first slot (N1) or of the second slot (N2) adapted in the sense of minimum scatter or maximum slot filling to the number of wound-in coil sides.

15. Starter-generator in accordance with claim 13 and/or 14
- with an alternating arrangement of the first slot (N1) and the second slot (N2) extending around the stator core (1.3 or 2.3).

## Revendications

1. Démarreur-génératrice pour un véhicule automobile comprenant
- une machine asynchrone à rotor disque (3) ;
- un rotor disque (3) possédant un enroulement en cage d'écureuil (3.1- 3.4) disposé dans un paquet de tôles de rotor ;
- un stator (1 ; 2) associé au rotor disque (3) possédant un enroulement de stator disposé dans un paquet de tôles de stator (1.3 ; 2.3) ;
- un entrefer (δ) qui s'élargit au moins radialement vers l'extérieur, en particulier en cône, à partir de l'axe médian, entre le stator (1 ; 2), ou la première partie de stator (1 ou 2), qui y est axialement adjacent.

2. Démarreur-génératrice selon la revendication 1, comprenant
- une réalisation élargie de l'entrefer (δ) résultant d'une configuration appropriée de la première partie (1) du stator ou de la deuxième partie (2) du stator avec un rotor disque (3) possédant une hauteur axiale qui reste constante sur toute son extension radiale.

3. Démarreur-génératrice selon la revendication 1 et/ou 2, comprenant
- des tôles du paquet de tôles de stator (1.3 ; 2.3) ou du paquet de tôles du rotor (3.5), qui s'étendent selon la périphérie du rotor disque, et qui sont isolées les unes des autres dans la direction radiale.

4. Démarreur-génératrice selon la revendication3, comprenant
- un paquet de tôles de stator (1.3 ; 2.3) ou un paquet de tôles de rotor (3.5) formé de bandes de tôle enroulées en spirale dans la direction circonférencielle.

5. Démarreur-génératrice selon au moins une des revendications 1-4, comprenant
- des barreaux de court-circuit de rotor (3.1 ; 3.2) disposés radialement entre un anneau de court-circuit radialement intérieur (3.3) s'étendant tangentiellement et un anneau de court-circuit (3.4), radialement extérieur, s'étendant tangentiellement, qui s'étendent dans le paquet de tôles de rotor (3.5).

6. Démarreur-génératrice selon au moins une des revendications 1-4, comprenant
- des encoches (1.31) destinées à recevoir un enroulement de stator avec les têtes d'enroulement (1.1 ; 2.1 ou 2.1,2.2) qui s'étendent radialement entre une tête d'enroulement radialement extérieure (1.1 ; 2.1) et une tête d'enroulement radialement intérieure (1.32 ; 2.2) dans le paquet de tôles de stator (1.3).

7. Démarreur-génératrice selon au moins une des revendications 1-6, comprenant
- une première partie de stator (1) et une deuxième partie de stator (2) disposées sur les deux côtés du rotor disque (3) dans la direction axiale, afin de créer une traction axiale neutralisée.

8. Démarreur-génératrice selon au moins une des revendications 1-7, comprenant
- des premiers barreaux de court-circuit de rotor (3.1) associés à la première partie de stator (1), ou placés en regard de cette partie, en particulier dans un premier plan axial de barreaux de court-circuit, et des deuxièmes barreaux de court-circuit (3.2) associés à la deuxième partie de stator (2) ou placés en regard de cette partie, en particulier dans un deuxième plan axial de barreaux de court-circuit ;
- un décalage tangentiel des premiers barreaux de court-circuit du rotor (3.1) par rapport aux deuxièmes barreaux de court-circuit du rotor (3.2) ;

9. Démarreur-génératrice selon au moins une des revendications 1-8, comprenant
- un rotor disque (3) disposé coaxialement à l'axe du vilebrequin (6) d'un moteur à combustion interne (4) du véhicule automobile ;
- une partie de stator (1.2) ou une première partie de stator (1) et une deuxième partie de stator (2) disposée(s) coaxialement à l'axe du vilebrequin (6) du moteur à combustion interne (4) du véhicule automobile.

10. Démarreur-génératrice selon au moins une des revendications 1-9, comprenant
- une disposition de la première partie de stator (1) fixée axialement entre le moteur à combustion interne (4), d'une part et une transmission (5), d'autre part, en particulier avec une première partie de stator (1) fixée au carter (4.1) du moteur à combustion interne (4) et une deuxième partie de stator (5.1) fixée au carter (5.1) de la transmission (5) et un rotor disque (3) disposé axialement entre la première partie de stator (1) et la deuxième partie de stator (2).

11. Démarreur-génératrice selon au moins une des revendications 1-9, comprenant
- une disposition du démarreur-génératrice sur l'extrémité du moteur à combustion interne (4) côté radiateur, à l'opposé de l'extrémité côté transmission.

12. Démarreur-génératrice selon au moins une des revendications 1-11, présentant
- un décalage tangentiel des encoches (1.31) de la première partie de stator (1) par rapport aux encoches (2.31) de la deuxième partie de stator (2).

13. Démarreur-génératrice selon au moins une des revendications 1-12, comprenant
- un enroulement de stator à m brins ;
- au moins une bobine de stator possédant au moins trois côtés de bobines par pôle et/ou par paire de pôles ;
- un petit nombre non entier d'enroulements par pôle et/ou par paire de pôles ;
- un paquet de tôles de stator (1.3 ou 2.3) qui reçoit l'enroulement de stator à m brins dans des encoches (N1-N72) ;
- pour chaque paquet de tôles de stator (1.3 ou 2.3), au moins une première encoche (N1) qui reçoit la plus grande partie des côtés de bobines et une deuxième encoche (N2) qui reçoit la partie restante des côtés de bobines.

14. Démarreur-génératrice selon la revendication 13, comprenant
- pour obtenir une dispersion minimale ou un remplissage maximal des encoches, une surface de la première encoche (N1) ou de la deuxième encoche (N2) qui est adaptée à chaque fois au nombre des côtés de bobines bobinés.

15. Démarreur-génératrice selon la revendication 13 et/ou 14, comprenant
- une disposition alternée de la première encoche (N1) et de la deuxième encoche (N2) sur la périphérie du paquet de tôles du stator (1.3 ou 2.3).
